# EUROPEAN PATENT SPECIFICATION

(11) **EP 4 252 117 B1**
(45) Date of publication and mention of the grant of the patent: **21.10.2026**
(21) Application number: 21827759.8
(22) Date of filing: 23.11.2021
(51) Int. Cl.: G06F 16/242

(54) **DETECTING SCHEMA INCOMPATIBILITIES FOR GENERATING VIEWS AT TARGET DATA STORES**
ERKENNUNG VON SCHEMAINKOMPATIBILITÄTEN ZUR ERZEUGUNG VON ANSICHTEN IN ZIELDATENSPEICHERN
DÉTECTION D'INCOMPATIBILITÉS DE SCHÉMA POUR PRODUIRE DES VUES DANS DES MAGASINS DE DONNÉES CIBLES

(30) Priority: 28.11.2020 US 202063118904 P; 29.06.2021 US 202117362729
(43) Date of publication of application: 04.10.2023
(73) Proprietor: Amazon Technologies, Inc., Seattle, WA 98108-1226 (US)
(72) Inventor: JINDAL, Himanshu, Seattle, Washington 98109-5210 (US); UMMENTHALA, Shivateja Reddy, Seattle, Washington 98109-5210 (US); GOO, Almann Tsutomu, Seattle, Washington 98109-5210 (US); PAPAKONSTANTINOU, Yannis, Seattle, Washington 98109-5210 (US); BRUCK, Lewis, Seattle, Washington 98109-5210 (US); CERTAIN, Tate Andrew, Seattle, Washington 98109-5210 (US); MAHESHWARI, Pulkit, Seattle, Washington 98109-5210 (US)
(74) Representative: D Young & Co LLP
(86) International application number: PCT/US2021/060552
(87) International publication number: WO 2022/115446

(56) References cited:
- US-B1- 10 628 415

## Description

### BACKGROUND

As the technological capacity for organizations to create, track, and retain information continues to grow, a variety of different technologies for managing and storing the rising tide of information have been developed. Database systems, for example, provide clients with many different specialized or customized configurations of hardware and software to manage stored information. However, the increasing amounts of data that organizations must store and manage often correspondingly increases both the number, size and complexity of data storage and management technologies that are used to perform various operations and services, such as utilizing the features of database systems, object stores, and data streams, which in turn escalate the cost of maintaining the information. Moreover, as different data storage technologies offer different performance benefits and features, tailoring the location of data to a data storage technology that provides performance and analysis benefits for that data may result in different data sets being spread across many different locations and types of storage systems. While utilizing such a deployment strategy for individual data sets offers some benefit to the individual data sets, some systems or applications may need access to multiple different data sets in order to operate, which can be challenging given the various interfaces, languages, and other technological hurdles that occur when accessing multiple data storage systems. Thus, techniques that can obtain and co-locate data from disparate data storage systems for systems or applications that use data from the disparate storage systems, without removing the data from their optimized source storage locations, may be highly desirable.

US10628415B1 discloses generating and updating materialized views over shared data.

### BRIEF DESCRIPTION OF THE DRAWINGS

FIG. 1 illustrates a logical block diagram illustrating a view management system that generates views according to received view definitions using a hub data model, according to some embodiments.
FIG. 2 is a logical block diagram illustrating a provider network offering a materialized view management service other services, including various data storage and processing services, that generates views according to received view definitions using a hub data model, according to some embodiments.
FIG. 3 is a logical block diagram illustrating a materialized view management service that implements managed materialized views created from data sources, according to some embodiments.
FIG. 4 is a sequence diagram illustrating interactions for creation and maintenance phases for a materialized view managed by a materialized view management service, according to some embodiments.
FIG. 5 is logical block diagram illustrating interactions supported by an example interface for a materialized view management service, according to some embodiments.
FIG. 6 is a logical block diagram illustrating a compatibility checker, according to some embodiments.
FIG. 7 is an example user interface for providing suggested corrections to an incompatible schema for a view definition, according to some embodiments.
FIG. 8 is a high-level flowchart illustrating various methods and techniques to detect schema incompatibilities for generating views at target data stores, according to some embodiments.
FIG. 9 is a high-level flowchart illustrating various methods and techniques to generating a mapping view from an existing view definition, according to some embodiments.
FIG. 10 is a high-level flowchart illustrating various methods and techniques generate views at a target data store according to a view definition specified in a query language, according to some embodiments
FIG. 11 illustrates an example system configured to implement the various methods, techniques, and systems described herein, according to some embodiments.

While embodiments are described herein by way of example for several embodiments and illustrative drawings, those skilled in the art will recognize that embodiments are not limited to the embodiments or drawings described. It should be understood, that the drawings and detailed description thereto are not intended to limit embodiments to the particular form disclosed, but on the contrary, the intention is to cover all modifications, equivalents and alternatives falling within the scope as defined by the appended claims. The headings used herein are for organizational purposes only and are not meant to be used to limit the scope of the description or the claims. As used throughout this application, the word "may" is used in a permissive sense (i.e., meaning having the potential to), rather than the mandatory sense (i.e., meaning must). Similarly, the words "include," "including," and "includes" mean including, but not limited to.

It will also be understood that, although the terms first, second, etc. may be used herein to describe various elements, these elements should not be limited by these terms. These terms are only used to distinguish one element from another. For example, a first contact could be termed a second contact, and, similarly, a second contact could be termed a first contact, without departing from the scope of the present invention. The first contact and the second contact are both contacts, but they are not the same contact.

### DETAILED DESCRIPTION OF EMBODIMENTS

Various techniques of detecting incompatibilities for generating views at target data stores are described herein. Different systems, applications, or services store data in multiple purpose-built databases or other data storage or processing technologies to ensure they use the right tool for the job at hand. However, there are many use cases that combine data from multiple such databases, data stores, or other types of data sources. For example, an application implementing an online multi-player game may need to track player profile data, player behavior, and offer in-game promotions. The application might keep player profile data in a low-latency non-relational (e.g., NoSQL) database, game events in an indexing service, player behavior analytics in a data warehouse service, and promotion catalog in a document database. To build a dashboard of top players and their game activities, an Extract Transform and Load (TEL) service could be used to set up pipelines that extract, transform, and combine data from these disparate systems into a single data store, such as a data caching service, in order to host the dashboard and do activities such as in-game promotion targeting. While such an approach may work for batch updates, keeping the dashboard updated in near real-time would have to rely upon writing significant custom code. The costs to create the custom code for complex integration and pre-computation workflows may increase as fast changing underlying data sources would cause further refinements or changes. Use cases and patterns like the example above exist in virtually every industry, decreasing system performance and increasing implementation costs.

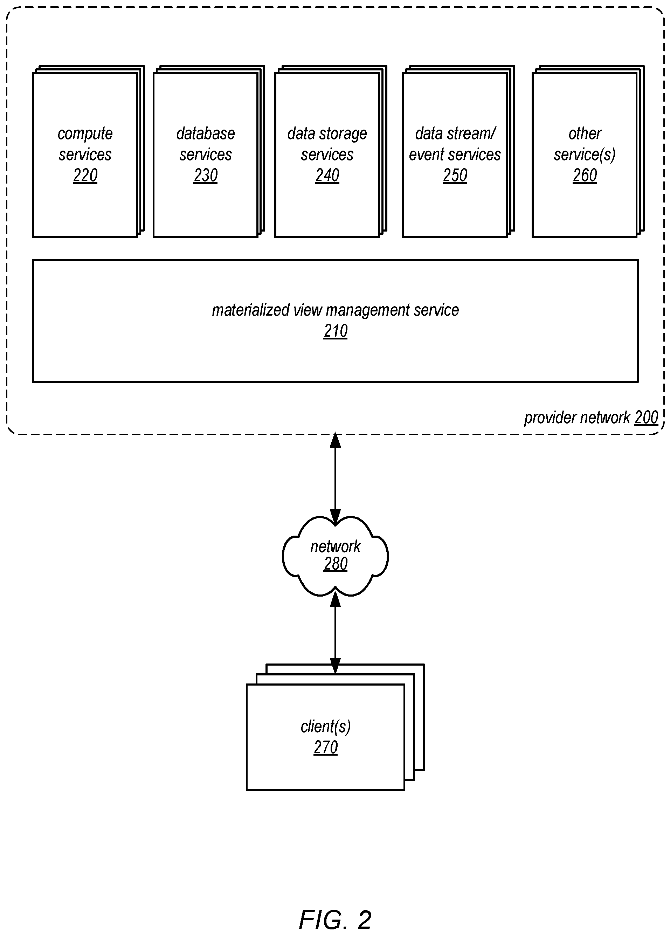

In various embodiments, a view management system may simplify operational workloads by making it easy to create views (e.g., materialized or federated query results) that integrate data from multiple sources, storing these views in a specified target database, and, in the scenario for materialized views, keeping the views up-to-date in near real-time as the underlying data changes (instead of, for instance, relying upon making batch-based sets of changes). As discussed in detail below with regard to FIGS. 2 - 7, a materialized view management service can offer a serverless experience for client applications while also offering for high performance. For example, in various embodiments, the materialized view management service can scale automatically to ingest large volumes of source data changes and to perform computations to construct the views. Because the materialized view management service may be serverless, in some embodiments, a client application (or developers for the client application) will not have to setup infrastructure, provision capacity or configure read and write limits. The materialized view management service instead receives a materialized view definition that specifies data sources, the integration of data from the different data sources and a target (or multiple targets) to store the materialized views. Other view management systems may be implemented, in some embodiments, that support federated querying across multiple data stores to a target data store with maintaining the view in materialized fashion (e.g., continuing to update the view).

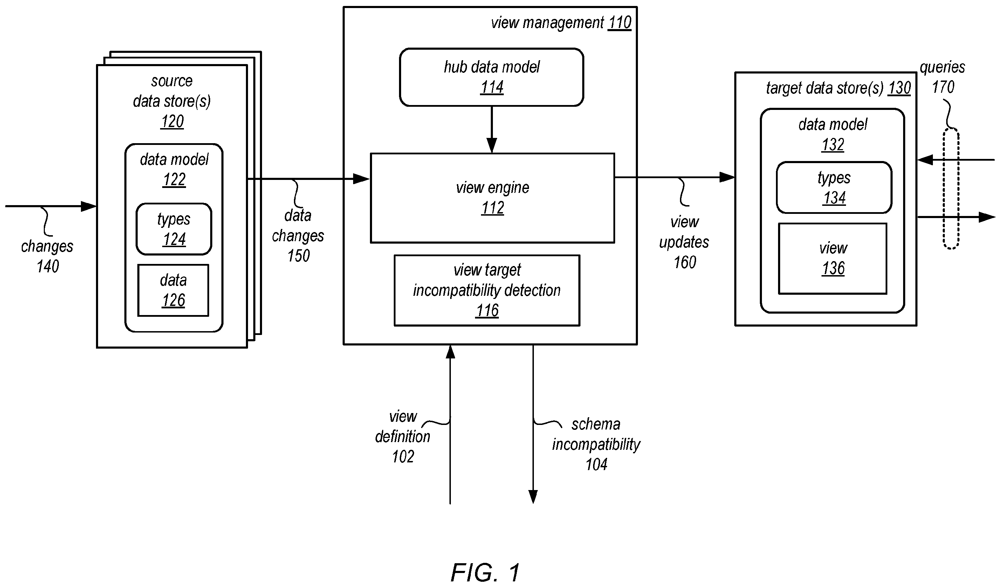

FIG. 1 illustrates a logical block diagram illustrating a view management system that generates views according to received view definitions using a hub data model, according to some embodiments. View management 110, may be a materialized view manage service 210 as discussed below with regard to FIGS. 2 - 7 implemented as part of a provider network or implemented as part of a private or on-premise network, or in some embodiments a view management system that can generate and store a federated a view in a specified location (e.g., for further analysis) without performing further updates. View management 110 may create views, such as view 136, from different numbers and types of source data sources 120 and store the resultant view 136 in one (or more) target data store(s) 130.

The view 136 can be accessed using the target data store, such as target data store 130 via queries 170. In this way, a desired type or style of data store, for example, for integrating the materialized can be specified. The interface supported by target data store 130 may be used to access the view 136, in various embodiments. For example, a SQL query may be made to access view 136 if target data store 130 is a relational database that supports SQL. If however target data store 132 were stored in a non-relational database, then a request according to the programming language or interface of the non-relational database may be used to access the materialized view instead. In this way, materialized views can be deployed to targets that support the desired features for analyzing and accessing the materialized view, in some embodiments.

A materialized view can be defined in various ways. A view definition 102 may be provided to view management 110, in various embodiments. For example, in some embodiments In some embodiments, a user interface or other type of interface (e.g. an Application Programming Interface (API)) can be used to specify the view, including the desired results (e.g., scan, get, join, aggregate, etc.), sources (e.g., by selecting data sources 120 from a list of offered sources), and targets (e.g., by selecting target(s) 130 from a list of offered targets). In some embodiments, target data store 130 can be one of the data sources 120 (e.g., with the view stored in a different location, such as a different table in a same database).

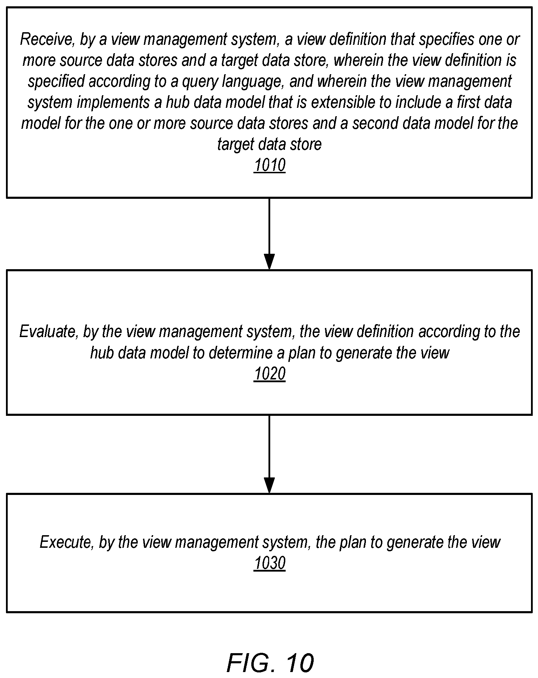

As discussed in detail below with regard to FIG. 10, in at least some embodiments, view definition 102 can be specified in a query language (e.g., PartiQL). In this way, the view definition 102 can take advantage of a hub data model 114 supported by view management system 110. Hub data model 114 may be an extensible data format, in various embodiments (e.g., utilizing Ion Schema Language) which may allow for the data models of source data store(s) 120 and target data store(s) 130 (e.g., data model 122 and data model 132 respectively) to be described (e.g., as schemas using a schema language like Ion Schema Language). In this way, the respective types 124 and 134 natively supported in each target data store can be enforced via the respective extensions of hub data model 114.

For example, view definition 102 may describe view 136 by including one or more mapping functions to convert a type of data 126 (e.g., a string value) into a character data type 134 of data model 132. Instead of imposing a translation burden on source data store(s) 120 or a user that submits view definition 102 to translate from data model 122 to data model 132, the data changes 150 may be provided in a format according to hub data model 114, which in turn may allow view engine 112 to convert them according in a manner specified in view definition 102 (e.g., allowing a user flexibility to identify how data 126 should be translated to data model 132 without having to specify how to translate from data model 122).

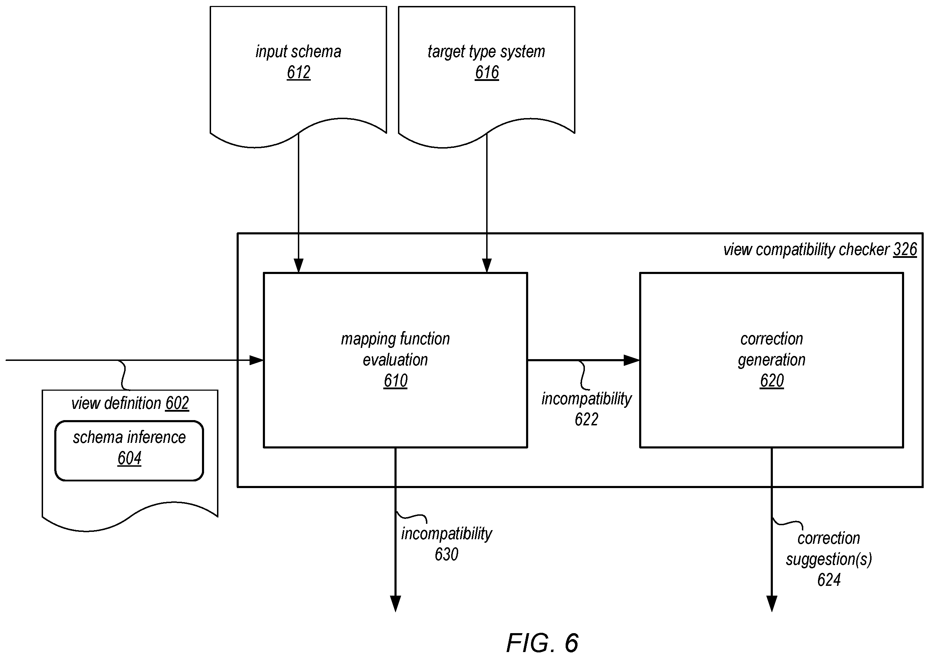

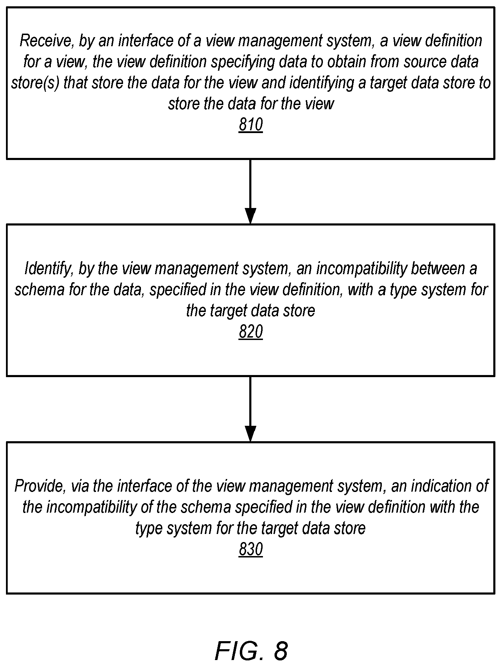

In various embodiments, view target incompatibility detection 116 may be implemented to detect scenarios where a view definition 102 includes versions that violate a type system for target data store(s) 130. As discussed in detail below with regard to FIGS. 6 and 8, the schema that is associated with the view definition 102 (e.g., as a schema describing data model 122 and/or a schema associated with another view definition upon which view definition 102 is build), may be compared with the type system for the target data store(s) 130 to detect invalid conversions or other features (e.g., invalid CAST, IS, or other mapping functions). In indication of schema incompatibility 104 is provided, in some embodiments, which also includes suggested corrections, as discussed below.

Data sources 120 may be many different types of data storage, processing, and/or management technologies, in some embodiments. For example, data sources 120 may be various types of databases (including relational databases, non-relational databases, graph databases, document databases, time series databases, data warehouses, or various other types of databases). In another example, data sources 120 may include various data streaming services or services (e.g., data streams for data feeds, events, or other stream processing techniques). In some embodiments, data sources 120 may be messaging, notification, or other communication services or services. Various combinations of the different example data sources may be used or combined to create a materialized view (e.g., a materialized view that joins a database table with a data stream). Similarly target data store 130 can be various types of data storage, processing, and/or management technologies, such as the examples given above.

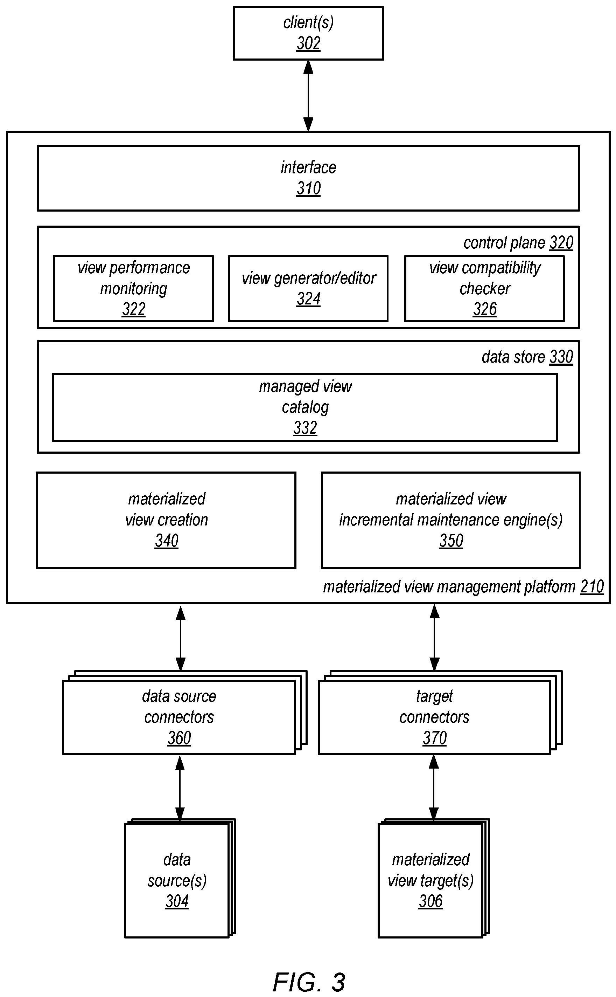

Once view management 110 creates view 136 in target data store 130, view management 110 may also maintain view 132 as a materialized view to provide near real-time updates, in some embodiments. In this way, view 136 may provide up-to-date changes when queries or analyzed. For example, as different changes 140 are made to (or by) data sources 120, these changes may be obtained 150 by view management system 110. For example, as discussed below with regard to FIG. 3, techniques for submitting data changes 150 as delta records in format corresponding to hub data model 114 may be performed.

Materialized view management 110 may implement view engine 112, in various embodiments. View engine 112 may perform various operations to/on the captured changes and then reformat, package, encapsulate, or otherwise translate the changes to the view 136, and provide view updates 160 in a format according to hub data model 114 (e.g., via target connectors 360) which may then be translated according to data model 132 to update view 136 view.

Please note that the previous description of view management is a logical illustration and thus is not to be construed as limiting as to the implementation of data sources, targets, views, or various other features. Different combinations or implementations may be implemented in various embodiments.

This specification begins with a general description of a provider network that implements a materialized view management service. Then various examples of a materialized view management service including different components/modules, or arrangements of components/module that may be employed as part of implementing the materialized view management service are discussed. A number of different methods and techniques to implement incompatibility handling to generate views at target data stores are then discussed, some of which are illustrated in accompanying flowcharts. Finally, a description of an example computing system upon which the various components, modules, systems, devices, and/or nodes may be implemented is provided. Various examples are provided throughout the specification.

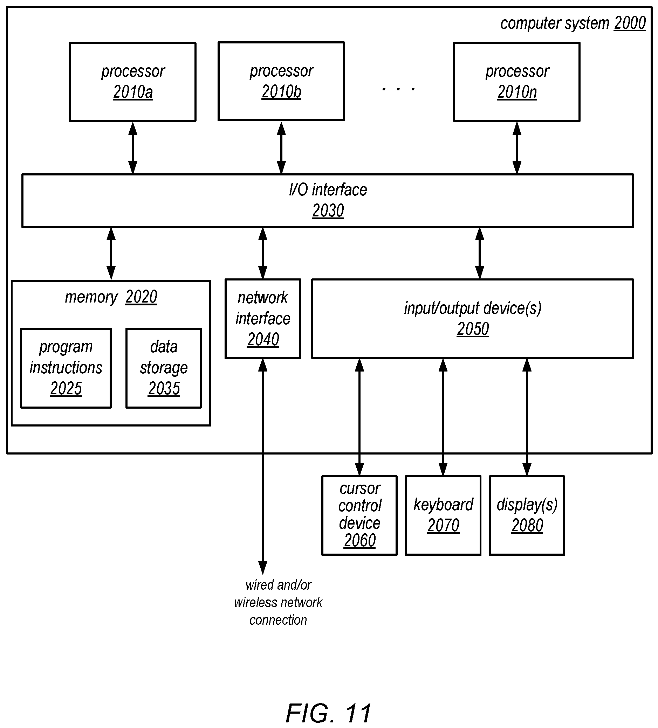

FIG. 2 is a logical block diagram illustrating a provider network offering a materialized view management service other services, including various data storage and processing services, that generates views according to received view definitions using a hub data model, according to some embodiments. Provider network 200 may be a private or closed system or may be set up by an entity such as a company or a public sector organization to provide one or more services (such as various types of cloud-based storage) accessible via the Internet and/or other networks to clients 270, in some embodiments. Provider network 200 may be implemented in a single location or may include numerous data centers hosting various resource pools, such as collections of physical and/or virtualized computer servers, storage devices, networking equipment and the like (e.g., computing system 2000 described below with regard to FIG. 11), needed to implement and distribute the infrastructure and services offered by the provider network 200. In some embodiments, provider network 200 may implement various computing systems, services, resources, or services, such as a materialized view management service 210, compute services 220, database service(s) 230, (e.g., relational or non-relational (NoSQL) database query engines, map reduce processing, data flow processing, and/or other large scale data processing techniques), data storage service(s) 240, (e.g., an object storage service, block-based storage service, or data storage service that may store different types of data for centralized access), data stream and/or event services 250, and other services 260 (any other type of network based services (which may include various other types of storage, processing, analysis, communication, event handling, visualization, and security services not illustrated).

In various embodiments, the components illustrated in FIG. 2 may be implemented directly within computer hardware, as instructions directly or indirectly executable by computer hardware (e.g., a microprocessor or computer system), or using a combination of these techniques. For example, the components of FIG. 2 may be implemented by a system that includes a number of computing nodes (or simply, nodes), each of which may be similar to the computer system embodiment illustrated in FIG. 11 and described below. In various embodiments, the functionality of a given system or service component (e.g., a component of data storage service 230) may be implemented by a particular node or may be distributed across several nodes. In some embodiments, a given node may implement the functionality of more than one service system component (e.g., more than one data store component).

Compute services 210 may be implemented by provider network 200, in some embodiments. Compute services 210 may offer instances, containers, and/or functions according to various configurations for client(s) 270 operation. A virtual compute instance may, for example, comprise one or more servers with a specified computational capacity (which may be specified by indicating the type and number of CPUs, the main memory size, and so on) and a specified software stack (e.g., a particular version of an operating system, which may in turn run on top of a hypervisor). A container may provide a virtual operation system or other operating environment for executing or implementing applications. A function may be implemented as one or more operations that are performed upon request or in response to an event, which may be automatically scaled to provide the appropriate number computing resources to perform the operations in accordance with the number requests or events. A number of different types of computing devices may be used singly or in combination to implement the compute instances, containers, and/or functions and of provider network 200 in different embodiments, including general purpose or special purpose computer servers, storage devices, network devices and the like. In some embodiments instance client(s) 270 or other any other user may be configured (and/or authorized) to direct network traffic to a compute instance.

Compute instances, containers, and/or functions may operate or implement a variety of different services, such as application server instances, general purpose or special-purpose operating systems, services that support various interpreted or compiled programming languages such as Ruby, Perl, Python, C, C++ and the like, or high-performance computing services) suitable for performing client(s) 270 applications, without for example requiring the client(s) 270 to access an instance. Applications (or other software operated/implemented by a compute instance and may be specified by client(s), such as custom and/or off-the-shelf software.

In some embodiments, compute instances, containers, and/or functions have different types or configurations based on expected uptime ratios. The uptime ratio of a particular compute instance may be defined as the ratio of the amount of time the instance is activated, to the total amount of time for which the instance is reserved. Uptime ratios may also be referred to as utilizations in some implementations. If a client expects to use a compute instance for a relatively small fraction of the time for which the instance is reserved (e.g., 30% - 35% of a year-long reservation), the client may decide to reserve the instance as a Low Uptime Ratio instance, and pay a discounted hourly usage fee in accordance with the associated pricing policy. If the client expects to have a steady-state workload that requires an instance to be up most of the time, the client may reserve a High Uptime Ratio instance and potentially pay an even lower hourly usage fee, although in some embodiments the hourly fee may be charged for the entire duration of the reservation, regardless of the actual number of hours of use, in accordance with pricing policy. An option for Medium Uptime Ratio instances, with a corresponding pricing policy, may be supported in some embodiments as well, where the upfront costs and the per-hour costs fall between the corresponding High Uptime Ratio and Low Uptime Ratio costs.

Compute instance configurations may also include compute instances, containers, and/or functions with a general or specific purpose, such as computational workloads for compute intensive applications (e.g., high-traffic web applications, ad serving, batch processing, video encoding, distributed analytics, high-energy physics, genome analysis, and computational fluid dynamics), graphics intensive workloads (e.g., game streaming, 3D application streaming, server-side graphics workloads, rendering, financial modeling, and engineering design), memory intensive workloads (e.g., high performance databases, distributed memory caches, in-memory analytics, genome assembly and analysis), and storage optimized workloads (e.g., data warehousing and cluster file systems). Size of compute instances, containers, and/or functions, such as a particular number of virtual CPU cores, memory, cache, storage, as well as any other performance characteristic. Configurations of compute instances, containers, and/or functions may also include their location, in a particular data center, availability zone, geographic, location, etc.... and (in the case of reserved compute instances, containers, and/or functions) reservation term length.

In various embodiments, database services 230 may be various types of data processing services that perform general or specialized data processing functions (e.g., analytics, big data querying, time-series data, graph data, document data, relational data, non-relational data, structured data, semi-structured data, unstructured data, or any other type of data processing operation) over data that is stored across multiple storage locations, in some embodiments. For example, in at least some embodiments, database services 210 may include various types of database services (e.g., relational) for storing, querying, and updating data. Such services may be enterprise-class database systems that are scalable and extensible. Queries may be directed to a database in database service(s) 230 that is distributed across multiple physical resources, as discussed below, and the database system may be scaled up or down on an as needed basis, in some embodiments. The database system may work effectively with database schemas of various types and/or organizations, in different embodiments. In some embodiments, clients/subscribers may submit queries or other requests (e.g., requests to add data) in a number of ways, e.g., interactively via an SQL interface to the database system or via Application Programming Interfaces (APIs). In other embodiments, external applications and programs may submit queries using Open Database Connectivity (ODBC) and/or Java Database Connectivity (JDBC) driver interfaces to the database system.

In some embodiments, database service(s) 230 may include services that process requests to data that is not stored in fully structured storage (e.g., non-relational or NoSQL databases). Database services 230 may access the data that is semi-structured or not-structured in storage, such as data objects of unstructured or semi-structured data in a separate data storage service, in one embodiment. In other embodiments, database services 230 may locally store, managed, and access semi-structured or not-structured data.

In some embodiments, database services 220 may be various types of data processing services to perform different functions (e.g., query or other processing engines to perform functions such as anomaly detection, machine learning, data lookup, or any other type of data processing operation). For example, in at least some embodiments, database services 230 may include a map reduce service that creates clusters of processing nodes that implement map reduce functionality over data stored in one of data storage services 240. Various other distributed processing architectures and techniques may be implemented by database services 230 (e.g., grid computing, sharding, distributed hashing, etc.). Note that in some embodiments, data processing operations may be implemented as part of data storage service(s) 230 (e.g., query engines processing requests for specified data).

Data storage service(s) 240 may implement different types of data stores for storing, accessing, and managing data on behalf of clients 270 as a network-based service that enables clients 270 to operate a data storage system in a cloud or network computing environment. For example, one data storage service 230 may be implemented as a centralized data store so that other data storage services may access data stored in the centralized data store for processing and or storing within the other data storage services, in some embodiments. Such a data storage service 240 may be implemented as an object-based data store, and may provide storage and access to various kinds of object or file data stores for putting, updating, and getting various types, sizes, or collections of data objects or files. Such data storage service(s) 230 may be accessed via programmatic interfaces (e.g., APIs) or graphical user interfaces. A data storage service 240 may provide virtual block-based storage for maintaining data as part of data volumes that can be mounted or accessed similar to local block-based storage devices (e.g., hard disk drives, solid state drives, etc.) and may be accessed utilizing block-based data storage protocols or interfaces, such as internet small computer interface (iSCSI).

In various embodiments, data stream and/or event services 250 may provide resources to ingest, buffer, and process streaming data in real-time. In some embodiments, data stream and/or event services 250 may act as an event bus or other communications/notifications for event driven systems or services (e.g., events that occur on provider network 200 services and/or on-premise systems or applications).

Generally speaking, clients 270 may encompass any type of client configurable to submit network-based requests to provider network 200 via network 280, including requests for materialized view management service 210 (e.g., a request to create a materialized view from different data sources of the other provider network services and identify one or more as a target data source). For example, a given client 270 may include a suitable version of a web browser, or may include a plug-in module or other type of code module that may execute as an extension to or within an execution environment provided by a web browser. Alternatively, a client 270 may encompass an application such as a database application (or user interface thereof), a media application, an office application or any other application that may make use of resources in in provider network 200 to implement various features, systems, or applications. (e.g., to store and/or access the data to implement various applications. In some embodiments, such an application may include sufficient protocol support (e.g., for a suitable version of Hypertext Transfer Protocol (HTTP)) for generating and processing network-based services requests without necessarily implementing full browser support for all types of network-based data. That is, client 270 may be an application may interact directly with provider network 200. In some embodiments, client 270 may generate network-based services requests according to a Representational State Transfer (REST)-style network-based services architecture, a document- or message-based network-based services architecture, or another suitable network-based services architecture.

In some embodiments, a client 270 may provide access to provider network 200 to other applications in a manner that is transparent to those applications. For example, client 270 may integrate with an operating system or file system to provide storage on one of data storage service(s) 240 (e.g., a block-based storage service). However, the operating system or file system may present a different storage interface to applications, such as a conventional file system hierarchy of files, directories and/or folders. In such an embodiment, applications may not need to be modified to make use of the storage system service model. Instead, the details of interfacing to the data storage service(s) 240 may be coordinated by client 270 and the operating system or file system on behalf of applications executing within the operating system environment. Note that in some embodiments, clients may instead (or also be) implemented as part of a service or other resource of provider network 200 (e.g., a compute instance, container, or function of compute services 220).

Clients 270 may convey network-based services requests (e.g., materialized view creation requests) to and receive responses from provider network 200 via network 280. In various embodiments, network 280 may encompass any suitable combination of networking hardware and protocols necessary to establish network-based-based communications between clients 270 and provider network 200. For example, network 280 may generally encompass the various telecommunications networks and service providers that collectively implement the Internet. Network 280 may also include private networks such as local area networks (LANs) or wide area networks (WANs) as well as public or private wireless networks. For example, both a given client 270 and provider network 200 may be respectively provisioned within enterprises having their own internal networks. In such an embodiment, network 280 may include the hardware (e.g., modems, routers, switches, load balancers, proxy servers, etc.) and software (e.g., protocol stacks, accounting software, firewall/security software, etc.) necessary to establish a networking link between given client 270 and the Internet as well as between the Internet and provider network 200. It is noted that in some embodiments, clients 270 may communicate with provider network 200 using a private network rather than the public Internet.

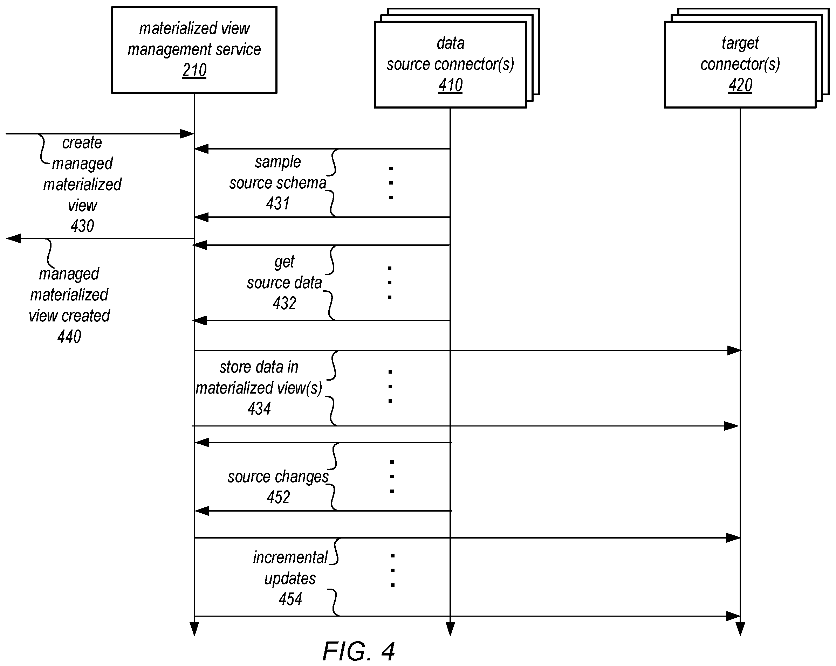

FIG. 3 is a logical block diagram illustrating a materialized view management service that implements managed materialized views created from heterogeneous data sources, according to some embodiments. Client(s) 302 (which may be similar to client(s) 270 in FIG. 2 above or other types of client systems, services or applications). Client(s) 302 may access materialized view management service 210 via interface 310. Interface 310 may be a graphical user interface (e.g., implemented as a console or other graphical control view a website). Interface 310 may be implemented as a command line interface, in some embodiments. Interface 310 maybe implemented as one or multiple programmatic interfaces, (e.g., one or more APIs). As discussed with regard to FIGS. 4 - 7, various types of requests may be received and/or responses sent via interface 310.

Materialized view management service 210 may implement control plane 320. Control plane 320 may implement various features for managing the resources and operations for creating and maintaining materialized views. For example, control plane 320 may implement various access control mechanisms or authentication techniques to ensure that requests to create materialized views are made with appropriate authorization (e.g., to create or delete a materialized view). Control plane 320 may implement various health or other system monitoring features to ensure that various features or components of materialized view management service are functioning correctly, repaired, or replaced. For example, control plane 320 may monitor a number nodes or instances used to implement view creation 340 and materialized view incremental maintenance engine(s), such as may be collected in pools or groups of instances, and replace, increase, or decrease the number of nodes or instances in order to meet demand or handle failures.

As indicated in FIG. 3, control plane 320 may implement view performance monitoring 322 in order to monitor the performance of creating and maintaining a materialized view, in some embodiments. For example, view performance monitoring 322 may collect or request performance metrics for change data capture, view computation, and view materialization to send the results to target data stores, and determine whether or not performance criteria for the view has been met. For example, performance criteria may include a lag time or other indicator for the time between when a change occurs at a source and when the change is included in an update made to a target. If the lag time exceeds a threshold amount of time (e.g., 10 minutes), then an adjustment event to reduce the lag time may be triggered. Other performance criteria may include the amount of data that is being received as a change (e.g., how many records, items or objects, or the size of data, such as 5 megabytes). Performance criteria may include criteria specified for the materialized view by a user, owner, developer, or operator via view interface 310. In some embodiments, the specified requirements may include limitations or other restrictions on the utilization of some resources (e.g., a limit on the amount of read or write load placed on a data source or target).

Control plane 320 may implement view performance adjustments to dynamically scale the resources associated with creating and maintaining a materialized view. In this way, a serverless experience can be provided, as the provisioning, management, allocation of resources may be handled by materialized view management service 210 (instead of by a user that is manually specifying the amount resources to implement for a materialized view. View performance adjustments may determine responsive actions to adjust materialized view creation and performance according to view performance monitoring 322 (e.g., according to the number and/or type of events detected). For example, view performance adjustments may increase (or decrease) the number of nodes assigned to view maintenance processing in order to keep pace with an increased number of changes received from data sources.

In various embodiments, control plane 320 may maintain, update, and/or access managed view state. Managed view state may indicate the state of various materialized views as the progress between creation and maintenance phases as well as other state information that informs operations or workflows performed on behalf of a materialized view. For example, managed view state may indicate in state information for a materialized view that the target for that the last maintenance operation to update a materialized view occurred 10 minutes ago and that another check for updates should be performed. Managed view state may identify and/or provide information for various features of materialized view creation 340 and materialized view maintenance 350.

As discussed in detail below with regard to FIG. 6, a view compatibility checker 326 may be implemented to detect incompatibility of a view definition with target data store's type system, in some embodiments. View compatibility checker 326 could alternatively be implemented as part of materialized view creation 340 and/or as part of run-time evaluations of materialized view incremental maintenance engine(s) 350.

Materialized view creation 340 may handle requests to create a materialized view. For example, materialized view creation 340 may perform initial validation of a view, such as checking the string length and basic structure. In some embodiments, materialized view creation 340 may generate maintenance or other execution plan to create and update the materialized view. In some embodiments, materialized view creation 340 may store the maintenance or other execution plan along with other artifacts to facilitate the materialized view in managed view catalog 332. In some embodiments, materialized view creation 340 may assign, provision, or initiate a materialized view incremental maintenance engine 350 to handle a materialized view (e.g., to obtain changes, generate view updates and store view updates to an out-bound log for the materialized view). Materialized view creation 340 may provide materialized view incremental maintenance engine(s) 350 assigned to a materialized view with the appropriate information (e.g., identifier for generated maintenance plan, identities of input and output logs for the data source(s) and target for the materialized view, etc.).

In various embodiments, data store 330 may be implemented as part of materialized view management service 210. For example, materialized view management service 332 may implement a managed view catalog 332. Managed view catalog 332 may store information related to materialized views, including a name, definition, access controls or configuration, maintenance and/or other historical information to indicate the progress or performance of a materialized view (e.g., last time updated). Managed view catalog 332 may store various state information or other metadata, such as metadata to describe the mappings between change logs for in-bound changes from source connector(s) 360 and out-bound changes to target connector(s) 370.

Materialized view management service 210 may implement data source connectors 360, in various embodiments. Data source connectors 360 may communicate with and obtain changes from data source(s) 304. In some embodiments, a data source connector 360 may facilitate a change capture protocol or interface for a particular type of data store (e.g., a MySQL connector, a data stream connector, an object store connector) for a corresponding one of data source(s) 304. In some embodiments, data source connectors 360 are implemented as part of a service or storage system implement data source(s) 304. As discussed above data source(s) 304 can be various services (or resources hosted within services) of provider network 200.

For example, data source connectors 360 may enable a changed data capture stream supported by a source database, and register as a recipient, authorized reader, or other component capable of obtaining updates to that source as a change stream. In some embodiments, the data source may be a data stream, and thus the data source connectors 360 may register or request to be a recipient of the data stream. In some embodiments, change data capture may poll for source changes. For example, data connector(s) 360 may record or maintain the state of previously received changes from a source (e.g., by timestamp, version identifier, etc.) and use the state to request changes that occurred since the last received state. The changes captured by data source connectors may be sent via interface 310 to a source-specific change log (e.g., an append-only change log implemented via a log-based database, ledger database, or other log-structured storage) in a format corresponding to the hub data model (e.g., in ION format) via which materialized view incremental creation engines 350 may read from the logs of corresponding sources contributing to a view.

Source connectors 360 may report source progress or performance information to control plane 320. In this way, control plane 320 can make performance determinations to adjust the performance of connectors, in some embodiments.

In some embodiments, materialized view increment maintenance engine(s) 350 may obtain a maintenance plan or other execution plan for updating a created materialized view from data store 330 (although in other embodiments a maintenance or other execution plan may be generated by materialized view incremental maintenance engine(s) 350). A maintenance plan may describe the various operations for combining changes to various updates received from the data sources to provide an updated view without regenerating the entire materialized view (e.g., without re-querying all sources to obtain all of the materialized view information). In some embodiments, view maintenance processing nodes may implement maintenance plan optimization to rewrite or utilize various features, such as intermediate results stored in intermediate tables and/or utilization local computational capabilities and storage, such as maintenance computation data (instead of using source computational storage and/or capabilities). In this way, view maintenance processing nodes can adapt to the capabilities of the data sources (e.g., supported or unsupported processing operations, such as supporting or not supporting joins, aggregations, etc.) or limitations on the data sources (e.g., read or write limitations on the data sources).

Materialized view incremental maintenance engine(s) 350 may implement maintenance plan execution. In some embodiments, view maintenance plan execution may be a query engine or processor that can perform the maintenance plan to obtain the changed data (as well as other data needed to make the update). If, for instance, a change is to a value that is joined with other data sources, then even if the other data sources are unchanged, the change may still need to be joined with the data from the unchanged sources, so a query may be performed to obtain that unchanged data from the data sources (or in the event it is stored as part of maintenance computation, the local copy can be utilized). Materialized view incremental maintenance engine(s) 350 may store records (e.g., in hub data model format) to an outbound log of changes specific to the materialized view, in some embodiments.

In some embodiments, materialized view incremental maintenance engine(s) 350 may rely upon external computation resources (e.g., compute function resource as discussed above with regard to FIG. 2 of compute services 220), which may perform an operation or determine a value used as part of updating a materialized view. Similarly, some data or query operations can be performed by data source resources, and thus queriesmay be performed as part of determining updates to a materialized view.

In some embodiments, materialized view incremental maintenance engine(s) 350 may report progress and performance information to control plane 320. In this way, control plane 320 can evaluate the performance of operations to determine updates and make adjustments to scale the resources allocated to maintaining the materialized view to satisfy performance criteria.

In various embodiments, materialized view management service 210 may implement an interface 311 which may support requests or other interactions with target connector(s) 370. Target connector(s) 370 may connect to and interact with a target for a materialized view. Similar to a data source connector 360, a target connector 370 can be respectively implemented for different types of targets (e.g., a target connector for a data warehouse or a target connector for a NoSQL database). As discussed above materialized view target(s) 306 can be various services (or resources hosted within services) of provider network 200. In some embodiments data source(s) 304 and/or materialized view target(s) 306 can be implemented partially or completely external to provider network 200 (e.g., at an on-premise network or at another provider service network). In some embodiments, materialized view management service 210 may allow for custom or user-implemented target or source connectors to be provided (e.g., uploaded via an interface and deployed for a requested materialized view) to customize the change data capture or materialized view export (e.g., from on-premise or custom data sources or targets).

Once changes to a materialized view have been computed from the changes of a data source (e.g., from delta log records received in the one or more inbound logs for the corresponding data sources 304), then changes to the materialized view may be materialized by materialized view management service 210. For example, materialized view incremental maintenance engine(s) 350 may store the updates to a view-specific change log (e.g., an append-only change log implemented via a log-based database, ledger database, or other log-structured storage) in a format corresponding to the hub data model (e.g., in ION format) via which target connectors 370 implemented in the target data store service (or implemented interact specifically for the target data store) may read from the logs of corresponding sources contributing to a view. Target connectors 370 may be implemented to interact with a target for a materialized view by applying the described changes to the materialized view.

For example, target connector(s) 370 may obtain the changes to be made to a materialized view, in various embodiments. In various embodiments, target connectors 370 may implement target-specified update translation. For example, target-specific update translation from the hub data model may be performed, including data type conversions, operation conversions, and/or generate the request parameters needed to perform an update request to make a corresponding change in the materialized view according to the interface of the target system. In some embodiments, target connector(s) 370 may enforce ordering constraints. In some embodiments, target connector(s) 370 may perform deduplication to prevent duplicate updates from being performed. For example, target connector(s) 370 may track the updates successfully performed (as discussed above) in order to prevent a failure from causing an already performed update from being re-performed.

Materialized view management service 210 may operate in different phases for a materialized view, in some embodiments. FIG. 4 is a sequence diagram illustrating interactions for creation and maintenance phases for a materialized view managed by a materialized view management service, according to some embodiments. For example, creation phase 402 may begin with a request to create a materialized view 430 received at materialized view 210 (e.g., via interface 310). The creation request 430 may include or specify the data source(s), data target(s), and view definition that the materialized view is to provide, in some embodiments. In some embodiments, the creation request may provide the access credentials (e.g., user id, password, etc.) or other permissions to allow the creation of the materialized view and update of the materialized view in the target. In some embodiments, an identity and access management service may coordinate authentication of materialized view management service and other services for creation and maintenance of a materialized view.

In some embodiments, a graphical interface may provide options of selectable data sources, operations to perform to determine a result from the selectable data sources, and selectable targets to which materialized view management service 210 is capable of accessing. Once the various materialized view definition parameters are selected, a create user interface element may be selected, which triggers the "create managed materialized view request 430" (using the selected parameters and result definition). Alternatively an API may utilized, allowing for a query language or other notation (e.g., JSON, ION, etc.) to specify the data source(s), target(s), and result definition. Similar parameters or inputs can be provided by a command via a command line interface.

Materialized view management service 210 may receive the request 430 and invoke the various features of a view creation process or workflow. For example, materialized view management service 210 may sample (or obtain in its entirety) a schema for the data obtained from a data source (e.g., sending requests to read or obtain a database table schema information). In some embodiments, materialized view management service 210 may get source data 432 from the data source connector(s) 410 (e.g., via the append-only log or an initial batch upload, snapshot, or other information used to generate the initial version of the materialized view). In some embodiments, a data source may push the data (e.g., a stream of data) to materialized view management service 210. Alternatively, some data sources may allow for materialized view management service 210 to query or send requests to access the desired data for the materialized view (e.g., according to a result set definition for the materialized view). Materialized view management service 210 perform one or multiple requests to store the materialized view(s) 434 via target connector(s) 420, in various embodiments. For example, materialize view management service 210 may store change log records or other information to an append-only log assigned to the materialized view and accessible to target connector(s) 420.

The requests to get source data 432 and store data 434 may continue until the materialized view is created. Then, the materialized view may begin maintenance phase 404. Maintenance phase 404 may allow for materialized view management service 210 to get 452 (e.g., via the append-only logs for the various data sources) or otherwise respond to changes to the data sources (e.g., additional data, removed data, modified data, etc.) in order to compute or otherwise determine an update to a materialized view. For example, if a materialized view provides an aggregation function (e.g., summary, average, count, deviation, etc.) then materialized view management service 210 may add, divided, subtract, union, join, or other perform various other operations to determine updated values corresponding to the obtained changes. Materialized view management service 210 may then perform one or more requests to update the new version(s) of the materialized view(s) 454 to include those changes at via target connector(s) 420 (e.g., via updates to the append only log for the materialized view).

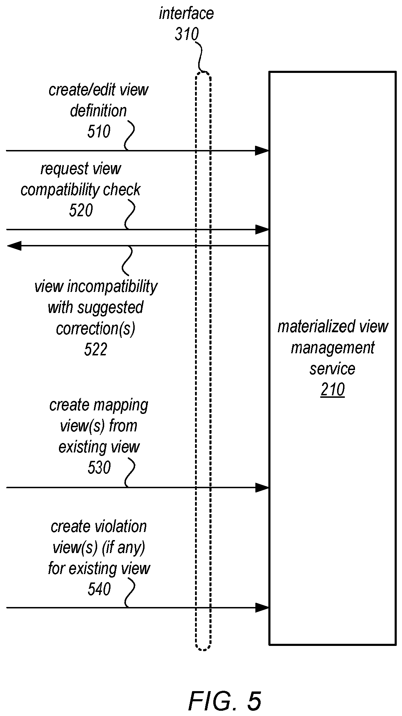

Various requests or interactions with a materialized view management service may be supported to configure creation and maintenance of materialized view and/or obtain information for materialized views. FIG. 5 is logical block diagram illustrating interactions supported by an example interface for a materialized view management service, according to some embodiments. As indicated at 510, a view definition may be created and edit 510 via interface 310. For example, the view definition may be entered via text editor, command line, and/or uploaded as a document (e.g., a JSON document).

As indicated at 520, interface 310 may support a request to perform a compatibility check for a view definition, as discussed above with regard to FIG. 1 and below with regard to FIGS. 6-8. An indication of incompatibility (or no compatibility issues) is provided, as indicated at 522. In some embodiments, the response indicating incompatibility includes suggestions to correct the detected incompatibilit(ies).

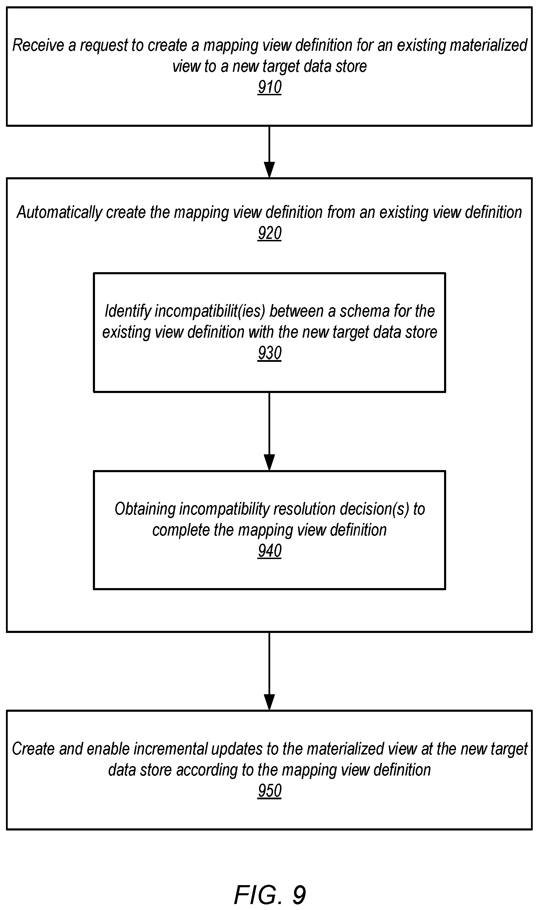

As indicated at 530, one or more mapping view(s) may be created from existing view(s), as discussed below with regard to FIG. 9. For example, a user may have created a view V. A user may want to target an additional database, DB2 and thus creates the mapping view M as:

```
   CREATE VIEW M AS
   SELECT CAST(d AS DECIMAL(10,2)) AS d
   CAST(a AS DB2::SUPER) AS a
   CAST(s AS VARCHAR(256)) AS s
   FROM V
```

The DB2:: SUPER type may be DB2's equivalent of ANY. An alternative to mapping view M may specify the mapping view with a schema on read functionality:

```
   CREATE VIEW SM
   FROM V
   AS SCHEMA (
   d DECIMAL(10,2),
   a DB2::SUPER,
   s VARCHAR(256)
   )
```

In some embodiments, one (or more) violation views may be created, as indicated at 540. A violation view may be created in various embodiments which may result in a logical violation when moving data from a source data store to a target data store (e.g., by losing some data or exhibiting an unusual schema). For example, if in the creation of the above map view, a user suspects that there are a few "d's" that cannot be cast to decimal and would like to keep track of them, as SUPER if possible, along with the associated s, a violation view may be created:

```
   CREATE VIEW Violating_d AS
   SELECT CAST (s AS VARCHAR (256)) AS s,
             CAST(d AS DB2::SUPER) AS d
   FROM V
   WHERE FAIL_CAST(d AS DECIMAL(10,2))
   // the FAIL_CAST can be emulated as NOT IS MISSING d AND // IS
   MISSING CAST(d AS DECIMAL(d))
```

In some embodiments, violations may be handled as part of a materialized view maintenance engine 350 in FIG. 3 or other component, which may report or send a notification that a violation has occurred, insert or add records to a violation view, among other techniques.

FIG. 6 is a logical block diagram illustrating a compatibility checker, according to some embodiments. View compatibility checker 326 can be implemented as part of a control plane (or as part of materialized view creation 340) to identify incompatibility between a view definition 602 and a type system of a target data store 616. For example, view definition 602 may include various features such as a mapping function (e.g., IS, CAST, CAN_CAST) which may specified a desired mapping to a target data store type to produce a schema inference 604 on input schema 612 (e.g., a translation of a view into the target type system from the input schema). Input scheme 612 (which may be descriptive of source data store types and/or an input view in the case of mapping view) may be provided to the mapping function evaluation 610. Target type system 616 (which may also be specified as an input schema 616) may be provided to mapping function evaluation 610.

Mapping function evaluation 610 can compare the schema from input schema 612 that informs the type mapping function to determine whether such a mapping can be made based on the permitted types according to target type system 616. For example, mapping functions can be compared with a truth table or other mapping table which describes which data type conversions between data stores are permitted or allowed (e.g., BOOLEAN may be converted to INTEGER, FLOAT, or DECIMAL, but not LIST). In some embodiments, type conversion constraints may also be evaluated as predicates on a type definition specified in a target type system 616. For example, this can be a length, precision, or scale in standard SQL terms (e.g. VARCHAR(10) or DECIMAL(5,3)).

For the purposes of type conversions, these type constraints may allow truncation or widening of a value. For example, casting to a fixed length STRING (e.g., CHAR) may ensure that the resulting string (if the conversion can be done) is of that length. Similarly, for a fixed scale and precision DECIMAL the value is rounded to the nearest value (round half to nearest even) and zero extended for less precise values. If, however, the value fails to meet the constraints on a given type, then an incompatibility exists. Other types may be checked, such as union types (e.g., where "IS" is true if and only if any of the types in the union are satisfied with the "IS" predicate. Various constraints, such as a missing data type, an open schema data type not permitted (e.g., not permitted in a system that only supports closed schemas), case sensitive mis-match (e.g., where one data store supports or requires case sensitivity and another does not), and so on.

As indicated at 630, incompatibility 630 may be provided to a requesting system or user. In some embodiments, correction suggestion(s) 624 may also be provided. For example, correction generation 620 may represent a knowledge base, decision tree, or other mapping component that can store a library of valid type mappings across different combinations of source or other input schemas and a target data store. For example, a correction suggestion 624 may output the specified list one or more valid type mappings (e.g., such as INTEGER, FLOAT, or DECIMAL for the BOOLEAN example discussed above).

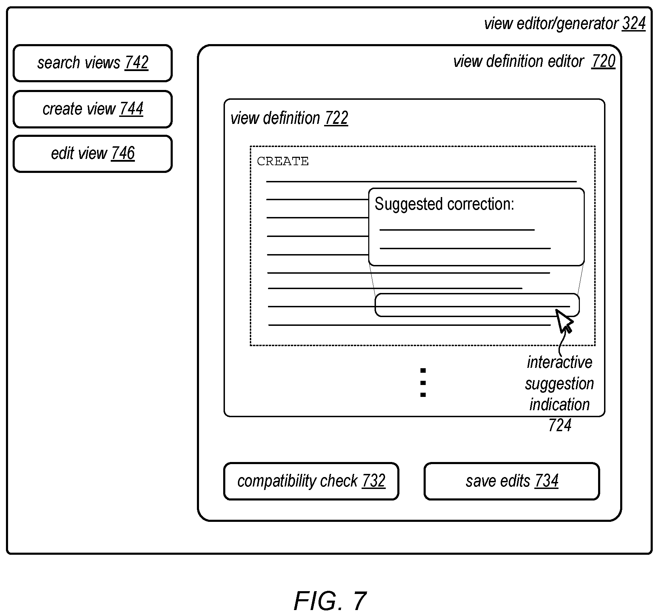

FIG. 7 is an example user interface for providing suggested corrections to an incompatible schema for a view definition, according to some embodiments. For example, view editor and generator 324 may implement a graphical user interface which may provide a view definition editor 720. Various user interface elements, such as elements to search views 742 (e.g., for previously created views), to start creation of a new view, as indicated at 744 (e.g., including mapping or violation view), or edit an existing view 746 may be implemented.

View definition editor 720 may include a display of view definition 722, which may support the text editing of the query language that specifies the view, in some embodiments. In at least some embodiments, view definition editor 720 may include a user interface element 732 to request compatibility check 732. Compatibility check 732 may, as discussed above with regard to FIGS. 5 and 6 return indications of when a schema for the view definition (e.g., as invoked or explicitly specified via functions such as CAST, IS, CAN_CAST) can be returned via view definition editor 720. For example, a visual indicator may be provided over a portion of the view definition that is the source of incompatibility. As indicated at 724, in some embodiments, suggested corrections may be provided by hovering or interaction with the incompatible portion, in some embodiments. For example, a suggested correction may identify a different data type to cast into. Edits to the view definition can be saved, in some embodiments.

Although FIGS. 2 - 7 have been described and illustrated in the context of a provider network implementing a materialized view management service, the various components illustrated and described in FIGS. 2 - 7 may be easily applied to other view management techniques, systems, or devices that manage the creation and management of views across different sources and targets. As such, FIGS. 2 - 7 are not intended to be limiting as to other embodiments of a system that may implement managed query execution. FIG. 8 is a high-level flowchart illustrating various methods and techniques to detect schema incompatibilities for generating views at target data stores, according to some embodiments.

Various different systems and devices may implement the various methods and techniques described below, either singly or working together. For example, a materialized view management service such as described above with regard to FIGS. 2 - 8 may implement the various methods. Alternatively, a combination of different systems and devices may implement these methods. Therefore, the above examples and or any other systems or devices referenced as performing the illustrated method, are not intended to be limiting as to other different components, modules, systems, or configurations of systems and devices.

As indicated at 810, a view definition for a view is received by an interface of a view management system, in various embodiments. For example, the view may be received via various types of command line, graphical user interfaces (e.g., an editor as discussed above with regard to FIG. 7), or programmatic interface (e.g., via one or more API calls). The view may, in various embodiments, specify data to obtain from source data store(s) that store the data for the view and identify a target data store to store the data for the view, in some embodiments. As discussed above with regard to FIG. 1, and below with regard to FIG. 10, in at least some embodiments the view may be specified in a query language (e.g., SQL, PartiQL, etc.) which may support various features (e.g., mapping functions or other type conversion operators, such as "IS", "CAST", and "CAN_CAST"). These features may take as input data obtained from a specified data source (e.g., database A) and map information like data types (e.g., a column from a table in database A) to a different data type in the target data store (e.g., Database B).

As indicated at 820, an incompatibility between a schema for the data, specified in the view definition, with a type system for a target data store is determined, in some embodiments. For example, a type system, as discussed above with regard to FIG. 1 may describe the rules to describe a valid format, shape, or other acceptable features of types (e.g., data, data structures, functions, variables, expressions, etc.) of data stored in the target data store. The incompatibility may be determined checking the view definition's type conversions to the target data store (e.g., specified via conversion operators) according to the target type system as provided to the view management system as an extension of the hub data model of the view management system.

For example, in various embodiments, a description of the target type system may be obtained or stored by the view management system according to a data hub model. For example, a data hub model (e.g., Ion data model) may be extended to support various expressions of different type systems for different data stores using a schema language (e.g., Ion Schema Language) which can describe the valid types supported for a given data store. In this way, data that is submitted to a view management system for generating a view according to the data hub model of the view management system can then be stored to a target data store as expressed in the view definition. Instead of burdening developers with the requirement to convert data from a source data model to a target data model (which could potentially lead to many different combinations of conversions because of multiple combinations of sources and target data stores), a view definition can be written to simply specify the conversions to a specific target data store, reducing the conversions to the number of different target data stores (or less if multiple target data stores support a same data model), in some embodiments.

As indicated at 830, an indication of the incompatibility of the schema specified in the view definition is provided via the interface. For example, an indication of particular feature, such as mapping function as specified by a conversion operator may be identified as incompatible. As discussed above with regard to FIG. 6, one or more suggestions for correcting the incompatibility may be provided. For example, a knowledge base may store common type mappings that are compatible between the schema and the target data store and provide one, some, or all of the common type mappings as suggested replacements for the incompatible type mapping, in some embodiments.

As discussed above, in some scenarios a view definition may already be deployed and used to provide a view (e.g., a materialized view at a target data store). If it is desirable add an additional target data store for the view, the view definition could be applied to generate and store the view at the additional target data store. If, however, the additional target data store's type system is not compatible with the schema for the current view definition, then the view definition may not be directly useable to produce the additional view without error. Instead of rewriting the current view definition to fit both target data stores, a mapping view may be created. FIG. 9 is a high-level flowchart illustrating various methods and techniques to generating a mapping view from an existing view definition, according to some embodiments.

As indicated at 910, a request may be received to create a mapping view definition for an existing materialized view to a new target data store, in some embodiments. The request may be received via various types of interfaces (e.g., programmatic, command line, or GUI) and may specify, for instance, a target data store and an existing view definition (e.g., by view definition identifier and target data store name).

While a mapping view could be created manually (e.g., via a view definition editor like the view editor 324 discussed above with regard to FIG. 3), as indicated at 920, in some embodiments, in response to receiving the request, the mapping view definition may be automatically created from an existing view definition, in some embodiments. For example, the existing view definition may be copied as an initial version of the mapping view definition. Then, as indicated at 930, incompatibility(ies) between a schema for the existing view definition with the new target data store may be identified, in some embodiments. For example, as discussed above with regard to FIG. 8, a type system for the new target data store may be evaluated with respect to the schema of the existing view definition to determine those mappings or other conversions that do not satisfy the new data store type system. Incompatibilities may be provided via an interface similar to the view definition editor discussed above with regard to FIG. 7 or other type of interface (e.g., command line). Suggestions may also be provided in some embodiments, using knowledge-based techniques. Resolution decision(s) to correct the in compatibilit(ies) may be obtained (e.g., as edits to the view definition or as acceptance of suggested corrections via the interface, or a combination of both) to complete the mapping view definition, in some embodiments, as indicated at 940.

Once created and compatible with the new target data store, the mapping view may be deployed by a view management system. For example, as indicated at 950, for a materialized view management service, the materialized view at the new target data store may be created and incremental updates enabled at the new target data store according to the mapping view definition, in some embodiments.

As discussed above with regard to FIG. 1, a hub data model may be implemented by a view management system to support the specification of view definitions in a query language so that different data models implemented by source and target systems can be converted using the query language specification of the view definition. FIG. 10 is a high-level flowchart illustrating various methods and techniques generate views at a target data store according to a view definition specified in a query language, according to some embodiments. As indicated at 1010, a view definition that specifies one or more source data stores and a target data store is received, in various embodiments. The view definition may be specified according to a query language (e.g., PartiQL), and wherein the view management system implements a hub data model that is extensible to include a first data model for the one or more source data stores and a second data model for the target data store, in some embodiments. For example, the hub data model may support the use of a schema specification language that can describe the type system for the source data store(s) and the target data store(s).

For example, in some embodiments, the structural typing of the source data store(s) and the target data store as specified in a query included in the view definition may be used to determine how to evaluate the view definition to determine a plan to generate the view, as indicated at 1020 and 1030. Such techniques may include ways for modeling types of data that cannot be represented in the hub data model in a lossless way (as for types of data that can be mapped to the hub data model, the hub data model encoding may be used). These data types of data that cannot be represented in the hub data model, which may be referred to as non-native types, may be encoded so that they can still be conveyed between a source data store and the view management system.

For example, a canonical representation may be associated for every non-native data type in a schema description that extends the hub data model. This schema description can be used to serialize and deserialize data of that type using the data format for the hub data model (e.g., Ion). For example, a database string set
as: $db_ss::["a", "b", "c"] A possible hub data model schema for the above might be:

```
   {
   name: db_string_set,
   // define new type--no relation to any other Ion type
   type: null,
   // kind of type
   archetype: collection,
   // canonical representation in Ion Schema 1.0
   ion_encoding: {
   type: list
   annotations: required:: ["db_ss"]
   }
   }
```

As exemplified by the above example, for data stores (e.g., target or source), their native types can be mapped to the hub data model using a schema as constrained hub data model types, or as completely new unrelated types with a hub data model representation specified. This may allow the convention to be formed for how to tunnel such values through a system that uses a query language in a view definition using a hub data model representation.

In various embodiments, static typing may be implemented as part of supporting query language view definitions. For example, in various embodiments, a new nominal type in a schema that has no relation to other types when operated on in the query language specifying the view definition may be encountered. This means that such a type may be distinct and generally opaque unless such a type has operations defined in the query language. However, since these types can be defined via extensions to the hub data model, as discussed above, these types may be considered to be defined statically, and therefore only visible with a schema associated with the query (e.g., that references the particular target or source data store from which data for the view is obtained or into which data for the view is stored). Such a technique allows an open type system with respect to foreign data stores, while maintaining query stability.

Take the string set example above. The schema provided encoding defined above could be used to convey the data to the a data processing engine within a view management system (e.g., one that generates incremental view updates as discussed above with regard to FIGS. 2 - 7) (though it is not required to), the compiler/planner can then make sure that such typing of data is maintained throughout the query, such that a SELECT * style query that passes through the data can maintain the native type to the destination. Thus, if a view were to project a native type from a source to a target where that type is compatible through inferred schema, the native value can be preserved and be ensured that the user's query does not interfere with the data.

Consider the following example schema:

```
   {
      name: my_db_table,
      type: bag,
      element: {
         type: struct,
         fields: {
            hk: string,
             some_names: db_string_set,
         }
      }
   }
```

From the source system, the following data would represent an element of the above table:

```
{
   hk: "some id",
   some _names: db_ss::["kumo", "zachy", "zoe"]
   }
```

Then consider the following query:
SELECT x.some_names[0] FROM my_db_table AS x

The above query may fail to compile as the indexing operator would not be applicable to the static type db_string_set as it would not be a list.

It may be the case that the view definition wishes to operate on the native type as in the hub data model. In a view management system, an intrinsic function or operator such as UNWRAP(x) that allows a query to see the native type as its canonical representation may be supported, in some embodiments. For example, in the database string set example above, a user may want to access the set elements as a list directly. This operation may be lossy with respect to the original typing of the data, and an intrinsic function to rewrap data as a particular native type WRAP(x, "db_ss") where the second parameter must be a resolvable at compile time may be provided. This can allow a view definition in a query language to have some ability to explicitly deal with native types in a controlled and explicit way. The syntax here may be different in other embodiments, and thus the previous example is not intended to be limiting.

Consider the following query from the previous example schema:
SELECT UNWRAP(x.some_names) [0] FROM my_db_table AS x In the above example, the indexing operator may now be applicable because the underlying value may be coerced to its schema-defined representation. It is worth noting that in some embodiments, a view management system may not actually have that value encoded in the hub data model.

In various embodiments, dynamic typing for view definitions specified in a query language may be supported. For example, even though strong typing of native data may be supported via schema above, in some embodiments, a source/target can allow for schema-less pass-through of open content and non-native (e.g., native to a data store) data types. For example, a source connector for a source data store will have a canonical representation in the hub data model for any types not native to the hub data model-this may be defined in the extended schema of said type in the hub data model, but can be used independent of that as a general way to encode data from the source system. On the target connector side, the same representation may be used to decode data in the hub data model into the native types of the destination system.

Although this provides the flexibility of decoupling dynamically typed non-hub data model typed data as a hub data model serialization/deserialization concern for the source and target data stores, it means that this data has no strong typing within a view definition in a query language, and will appear as its hub data model encoded counterpart directly and thus could be harder for a view management system to detect when such data is flowing into a system that it shouldn't (e.g. database record into a different database system table with fully open content). This concern may be mitigated by a convention that all such hub data model encodings of these types may be well described with annotations-in practice such a downstream system may be able to fail when types don't align and the hub data model encoding should be sufficiently self-described to indicate what happened. If it is the case that this is insufficient, a user can simply provide schema to add the type safety defined earlier.

Again, let us consider the previous table schema with a record as follows:

```
   {
   hk: "some id",
   some_names: db_ss::["kumo", "zachy", "zoe"],
   other _names: db_ss::["mary", "bob"],
   }
```

In the above example, other_names is not typed within the schema, but encoded as open content from the source system using the same encoding as what is specified by the schema definition for that non-native type. A query on this field may be:
SELECT x.other_names[0] FROM my_db_table AS x

In the above query, the static type of the other_names field is ANY so there is nothing to assert about the static type of that field. At runtime, for the above example record, the runtime type is list and the indexing operator is applicable to it. If stronger typing is desired here, the casting (wrapping) operator could be used to apply the static type to it or explicit schema around that field could be provided.

As indicated at 1020, the view definition may be evaluated by the view management system according to the hub data model to determine a plan to generate the view, in some embodiments. For example, as discussed in detail above the query language may be able to specify various mapping operations (e.g., CAST, CAN_CAST, IS) as well as the various techniques for static and dynamic type that rely upon the features of the extensions defined for source and target data stores to determine a plan to generate the view. For example, a plan may include various operations, dependencies, orderings, or other instructions to carry out obtaining, formatting, and/or otherwise generating the view described by the view definition. A plan may be structured, logically, as tree or other execution graph, in some embodiments. A plan may be compiled or otherwise translated into executable instructions that can be carried out by, for example, an incremental view maintenance engine or other computing resource.

As indicated at 1030, the view management system may execute the plan to generate the view, in various embodiments. For example, the data obtained from source data stores may be interpreted according to the schema by an incremental view maintenance engine and output in a format that can be interpreted and applied to the target data store (e.g., by one or more instructions to store or insert the data at the target data store).

The methods described herein may in various embodiments be implemented by any combination of hardware and software. For example, in one embodiment, the methods may be implemented by a computer system (e.g., a computer system as in FIG. 11) that includes one or more processors executing program instructions stored on a computer-readable storage medium coupled to the processors. The program instructions may be configured to implement the functionality described herein (e.g., the functionality of various servers and other components that implement the network-based virtual computing resource provider described herein). The various methods as illustrated in the figures and described herein represent example embodiments of methods. The order of any method may be changed, and various elements may be added, reordered, combined, omitted, modified, etc.

Embodiments of detecting schema incompatibilities for generating views at target data stores as described herein may be executed on one or more computer systems, which may interact with various other devices. One such computer system is illustrated by FIG. 11. In different embodiments, computer system 2000 may be any of various types of devices, including, but not limited to, a personal computer system, desktop computer, laptop, notebook, or netbook computer, mainframe computer system, handheld computer, workstation, network computer, a camera, a set top box, a mobile device, a consumer device, video game console, handheld video game device, application server, storage device, a peripheral device such as a switch, modem, router, or in general any type of computing device, computing node, compute node, computing system compute system, or electronic device.

In the illustrated embodiment, computer system 2000 includes one or more processors 2010 coupled to a system memory 2020 via an input/output (I/O) interface 2030. Computer system 2000 further includes a network interface 2040 coupled to I/O interface 2030, and one or more input/output devices 2050, such as cursor control device 2060, keyboard 2070, and display(s) 2080. Display(s) 2080 may include standard computer monitor(s) and/or other display systems, technologies or devices. In at least some implementations, the input/output devices 2050 may also include a touch- or multi-touch enabled device such as a pad or tablet via which a user enters input via a stylus-type device and/or one or more digits. In some embodiments, it is contemplated that embodiments may be implemented using a single instance of computer system 2000, while in other embodiments multiple such systems, or multiple nodes making up computer system 2000, may host different portions or instances of embodiments. For example, in one embodiment some elements may be implemented via one or more nodes of computer system 2000 that are distinct from those nodes implementing other elements.

In various embodiments, computer system 2000 may be a uniprocessor system including one processor 2010, or a multiprocessor system including several processors 2010 (e.g., two, four, eight, or another suitable number). Processors 2010 may be any suitable processor capable of executing instructions. For example, in various embodiments, processors 2010 may be general-purpose or embedded processors implementing any of a variety of instruction set architectures (ISAs), such as the x86, PowerPC, SPARC, or MIPS ISAs, or any other suitable ISA. In multiprocessor systems, each of processors 2010 may commonly, but not necessarily, implement the same ISA.

In some embodiments, at least one processor 2010 may be a graphics processing unit. A graphics processing unit or GPU may be considered a dedicated graphics-rendering device for a personal computer, workstation, game console or other computing or electronic device. Modern GPUs may be very efficient at manipulating and displaying computer graphics, and their highly parallel structure may make them more effective than typical CPUs for a range of complex graphical algorithms. For example, a graphics processor may implement a number of graphics primitive operations in a way that makes executing them much faster than drawing directly to the screen with a host central processing unit (CPU). In various embodiments, graphics rendering may, at least in part, be implemented by program instructions configured for execution on one of, or parallel execution on two or more of, such GPUs. The GPU(s) may implement one or more application programmer interfaces (APIs) that permit programmers to invoke the functionality of the GPU(s). Suitable GPUs may be commercially available from vendors such as NVIDIA Corporation, ATI Technologies (AMD), and others.

System memory 2020 may store program instructions and/or data accessible by processor 2010. In various embodiments, system memory 2020 may be implemented using any suitable memory technology, such as static random access memory (SRAM), synchronous dynamic RAM (SDRAM), nonvolatile/Flash-type memory, or any other type of memory. In the illustrated embodiment, program instructions and data implementing desired functions, such as those described above are shown stored within system memory 2020 as program instructions 2025 and data storage 2035, respectively. In other embodiments, program instructions and/or data may be received, sent or stored upon different types of computer-accessible media or on similar media separate from system memory 2020 or computer system 2000. Generally speaking, a non-transitory, computer-readable storage medium may include storage media or memory media such as magnetic or optical media, e.g., disk or CD/DVD-ROM coupled to computer system 2000 via I/O interface 2030. Program instructions and data stored via a computer-readable medium may be transmitted by transmission media or signals such as electrical, electromagnetic, or digital signals, which may be conveyed via a communication medium such as a network and/or a wireless link, such as may be implemented via network interface 2040.

In one embodiment, I/O interface 2030 may coordinate I/O traffic between processor 2010, system memory 2020, and any peripheral devices in the device, including network interface 2040 or other peripheral interfaces, such as input/output devices 2050. In some embodiments, I/O interface 2030 may perform any necessary protocol, timing or other data transformations to convert data signals from one component (e.g., system memory 2020) into a format suitable for use by another component (e.g., processor 2010). In some embodiments, I/O interface 2030 may include support for devices attached through various types of peripheral buses, such as a variant of the Peripheral Component Interconnect (PCI) bus standard or the Universal Serial Bus (USB) standard, for example. In some embodiments, the function of I/O interface 2030 may be split into two or more separate components, such as a north bridge and a south bridge, for example. In addition, in some embodiments some or all of the functionality of I/O interface 2030, such as an interface to system memory 2020, may be incorporated directly into processor 2010.

Network interface 2040 may allow data to be exchanged between computer system 2000 and other devices attached to a network, such as other computer systems, or between nodes of computer system 2000. In various embodiments, network interface 2040 may support communication via wired or wireless general data networks, such as any suitable type of Ethernet network, for example; via telecommunications/telephony networks such as analog voice networks or digital fiber communications networks; via storage area networks such as Fibre Channel SANs, or via any other suitable type of network and/or protocol.

Input/output devices 2050 may, in some embodiments, include one or more display terminals, keyboards, keypads, touchpads, scanning devices, voice or optical recognition devices, or any other devices suitable for entering or retrieving data by one or more computer system 2000. Multiple input/output devices 2050 may be present in computer system 2000 or may be distributed on various nodes of computer system 2000. In some embodiments, similar input/output devices may be separate from computer system 2000 and may interact with one or more nodes of computer system 2000 through a wired or wireless connection, such as over network interface 2040.

As shown in FIG. 11, memory 2020 may include program instructions 2025, may implement the various methods and techniques as described herein, and data storage 2035, comprising various data accessible by program instructions 2025. In one embodiment, program instructions 2025 may include software elements of embodiments as described herein and as illustrated in the Figures. Data storage 2035 may include data that may be used in embodiments. In other embodiments, other or different software elements and data may be included.

Those skilled in the art will appreciate that computer system 2000 is merely illustrative and is not intended to limit the scope of the techniques as described herein. In particular, the computer system and devices may include any combination of hardware or software that can perform the indicated functions, including a computer, personal computer system, desktop computer, laptop, notebook, or netbook computer, mainframe computer system, handheld computer, workstation, network computer, a camera, a set top box, a mobile device, network device, internet appliance, PDA, wireless phones, pagers, a consumer device, video game console, handheld video game device, application server, storage device, a peripheral device such as a switch, modem, router, or in general any type of computing or electronic device. Computer system 2000 may also be connected to other devices that are not illustrated, or instead may operate as a stand-alone system. In addition, the functionality provided by the illustrated components may in some embodiments be combined in fewer components or distributed in additional components. Similarly, in some embodiments, the functionality of some of the illustrated components may not be provided and/or other additional functionality may be available.

Those skilled in the art will also appreciate that, while various items are illustrated as being stored in memory or on storage while being used, these items or portions of them may be transferred between memory and other storage devices for purposes of memory management and data integrity. Alternatively, in other embodiments some or all of the software components may execute in memory on another device and communicate with the illustrated computer system via inter-computer communication. Some or all of the system components or data structures may also be stored (e.g., as instructions or structured data) on a computer-accessible medium or a portable article to be read by an appropriate drive, various examples of which are described above. In some embodiments, instructions stored on a non-transitory, computer-accessible medium separate from computer system 2000 may be transmitted to computer system 2000 via transmission media or signals such as electrical, electromagnetic, or digital signals, conveyed via a communication medium such as a network and/or a wireless link. Various embodiments may further include receiving, sending or storing instructions and/or data implemented in accordance with the foregoing description upon a computer-accessible medium. Accordingly, the present invention may be practiced with other computer system configurations.

It is noted that any of the distributed system embodiments described herein, or any of their components, may be implemented as one or more web services. For example, leader nodes within a data warehouse system may present data storage services and/or database services to clients as network-based services. In some embodiments, a network-based service may be implemented by a software and/or hardware system designed to support interoperable machine-to-machine interaction over a network. A network-based service may have an interface described in a machine-processable format, such as the Web Services Description Language (WSDL). Other systems may interact with the web service in a manner prescribed by the description of the network-based service's interface. For example, the network-based service may define various operations that other systems may invoke, and may define a particular application programming interface (API) to which other systems may be expected to conform when requesting the various operations.

In various embodiments, a network-based service may be requested or invoked through the use of a message that includes parameters and/or data associated with the network-based services request. Such a message may be formatted according to a particular markup language such as Extensible Markup Language (XML), and/or may be encapsulated using a protocol such as Simple Object Access Protocol (SOAP). To perform a web services request, a network-based services client may assemble a message including the request and convey the message to an addressable endpoint (e.g., a Uniform Resource Locator (URL)) corresponding to the web service, using an Internet-based application layer transfer protocol such as Hypertext Transfer Protocol (HTTP).

In some embodiments, web services may be implemented using Representational State Transfer ("RESTful") techniques rather than message-based techniques. For example, a web service implemented according to a RESTful technique may be invoked through parameters included within an HTTP method such as PUT, GET, or DELETE, rather than encapsulated within a SOAP message.

The various methods as illustrated in the FIGS. and described herein represent example embodiments of methods. The methods may be implemented in software, hardware, or a combination thereof.

## Claims

1. A system, comprising:
at least one processor; and
a memory, storing program instructions that when executed by the at least one processor, cause the at least one processor to implement a materialized view management service, the materialized view management service configured to:
receive, via an interface, a view definition for a materialized view, the view definition specifying data to obtain from a plurality of source data stores that store the data of the materialized view and identifying a target data store to store the data of the materialized view (810);
detect an incompatibility between a schema for the data specified in the view definition with a type system for the target data store (820);
determine one or more suggested modifications to the view definition to resolve the incompatibility;
provide, via the interface, an indication of the incompatibility of the schema specified in the view definition with the type system for the target data store; wherein the one or more suggested modifications are provided with the indication of the incompatibility of the data type (830).

2. The system of claim 1, wherein the view definition includes a function mapping an item in the data to a data type in the type system for the target data store and wherein to detect the incompatibility between the schema for the data, specified in the view definition with the type system for the target data store, the materialized view management service is configured to detect a missing data type when evaluating the function specified in the view definition mapping the item to the data type in the type system for the target data store.

3. The system of claim 1 or 2, wherein the view definition is a mapping view definition, wherein the mapping view definition identifies a schema for the view specified in a different view definition that identifies a different target data store to store the view.

4. A method, comprising:
receiving, by an interface of a view management system, a view definition for a view, the view definition specifying data to obtain from one or more source data stores that store the data for the view and identifying a target data store to store the data for the view (810);
identifying, by the view management system, an incompatibility between a schema for the data, specified in the view definition with a type system for the target data store (820);
determining one or more suggested modifications to the view definition to resolve the incompatibility; and
providing, via the interface of the view management system, an indication of the incompatibility of the schema specified in the view definition with the type system for the target data store; wherein the one or more suggested modifications are provided with the indication of the incompatibility (830).

5. The method of claim 4, wherein the view definition includes a function mapping an item in the data to a data type in the type system for the target data store and wherein identifying the incompatibility between the schema for the data, specified in the view definition with the type system for the target data store comprises receiving a missing data type response for the function specified in the view definition mapping the item to the data type in the type system for the target data store when generating an execution plan for the view by the view management system.

6. The method of claim 4 or 5, wherein the view definition is a mapping view definition, wherein the mapping view definition identifies a schema for the view specified in a different view definition that identifies a different target data store to store the view.

7. The method of any of claims 4-6, wherein the view definition is specified according to a query language.

8. The method of any of claims 4-7, wherein the one or more data stores store data according to a first data model, wherein the target data store stores data according to a second data model, wherein the view management system implements a hub data model, and wherein the first data model and the second data model are respective extensions of the hub data model.

9. The method of claim 8, wherein view definition further specifies a different source data store in addition to the one or more source data stores to obtain further data from the different source data store to store in the target data store as part of the view, wherein the further data stored in the different source data store is stored according to a third data model different from the first data model.

10. The method of any of claims 4-9, wherein the view management system is a materialized view management service offered as part of a provider network that offers a plurality of different data storage services, wherein the target data store is implemented as part of one of the plurality of data storage services different than the one or more source data stores.

11. A non-transitory, computer-readable storage medium, storing program instructions that when executed on or across one or more computing devices, cause the one or more computing devices to implement
receiving, by an interface of a view management system, a view definition for a view, the view definition specifying data to obtain from one or more source data stores that store the data for the view and identifying a target data store to store the data for the view (810);
identifying, by the view management system, an incompatibility between a schema for the data, specified in the view definition with a type system for the target data store (820);
determining one or more suggested modifications to the view definition to resolve the incompatibility; and
providing, via the interface of the view management system, an indication of the incompatibility of the schema specified in the view definition with the type system for the target data store; wherein the one or more suggested modifications are provided with the indication of the incompatibility (830).

12. The one or more non-transitory, computer-readable storage media of claim 11, wherein the view definition includes a function mapping an item in the data to a data type in the type system for the target data store and wherein, in identifying the incompatibility between the schema for the data, specified in the view definition with the type system for the target data store, the program instructions cause the one or more computing devices to implement receiving a missing data type response for the function specified in the view definition mapping the item to the data type in the type system for the target data store when generating an execution plan for the view by the view management system.

## Patentansprüche

1. System, umfassend:
mindestens einen Prozessor; und
einen Speicher, der Programmanweisungen speichert, die, wenn sie durch den mindestens einen Prozessor ausgeführt werden, den mindestens einen Prozessor veranlassen, einen materialisierten Ansichtsverwaltungsdienst zu implementieren, wobei der materialisierte Ansichtsverwaltungsdienst ausgelegt ist zum:
Empfangen, über eine Schnittstelle, einer Ansichtsdefinition für eine materialisierte Ansicht, wobei die Ansichtsdefinition Daten spezifiziert, die von mehreren Quelldatenspeichern, die die Daten der materialisierten Ansicht speichern, zu erhalten sind, und einen Zieldatenspeicher zum Speichern der Daten der materialisierten Ansicht identifiziert (810);
Detektieren einer Inkompatibilität zwischen einem Schema für die in der Ansichtsdefinition spezifizierten Daten und einem Typsystem für den Zieldatenspeicher (820);
Bestimmen einer oder mehrerer vorgeschlagener Modifikationen an der Ansichtsdefinition, um die Inkompatibilität aufzulösen;
Bereitstellen, über die Schnittstelle, einer Angabe der Inkompatibilität des Schemas, das in der Ansichtsdefinition spezifiziert ist, mit dem Typsystem für den Zieldatenspeicher; wobei die eine oder die mehreren vorgeschlagenen Modifikationen mit der Angabe der Inkompatibilität des Datentyps versehen werden (830).

2. System nach Anspruch 1, wobei die Ansichtsdefinition eine Funktion aufweist, die ein Element in den Daten auf einen Datentyp in dem Typsystem für den Zieldatenspeicher abbildet, und wobei zum Detektieren der Inkompatibilität zwischen dem Schema für die Daten, das in der Ansichtsdefinition spezifiziert ist, und dem Typsystem für den Zieldatenspeicher der materialisierte Ansichtsverwaltungsdienst dazu ausgelegt ist, einen fehlenden Datentyp zu detektieren, wenn die in der Ansichtsdefinition angegebene Funktion ausgewertet wird, die das Element auf den Datentyp im Typsystem für den Zieldatenspeicher abbildet.

3. System nach Anspruch 1 oder 2, wobei die Ansichtsdefinition eine Abbildungsansichtsdefinition ist, wobei die Abbildungsansichtsdefinition ein Schema für die Ansicht identifiziert, das in einer anderen Ansichtsdefinition spezifiziert ist, die einen anderen Zieldatenspeicher zum Speichern der Ansicht identifiziert.

4. Verfahren, umfassend:
Empfangen, durch eine Schnittstelle eines Ansichtsverwaltungssystems, einer Ansichtsdefinition für eine Ansicht, wobei die Ansichtsdefinition Daten spezifiziert, die von einem oder mehreren Quelldatenspeichern zu erhalten sind, die die Daten für die Ansicht speichern, und einen Zieldatenspeicher zum Speichern der Daten für die Ansicht identifiziert (810);
Identifizieren, durch das Ansichtsverwaltungssystem, einer Inkompatibilität zwischen einem Schema für die Daten, das in der Ansichtsdefinition spezifiziert ist, und einem Typsystem für den Zieldatenspeicher (820);
Bestimmen einer oder mehrerer vorgeschlagener Modifikationen an der Ansichtsdefinition, um die Inkompatibilität aufzulösen; und
Bereitstellen, über die Schnittstelle des Ansichtsverwaltungssystems, einer Angabe der Inkompatibilität des Schemas, das in der Ansichtsdefinition spezifiziert ist, mit dem Typsystem für den Zieldatenspeicher; wobei die eine oder die mehreren vorgeschlagenen Modifikationen mit der Angabe der Inkompatibilität versehen werden (830).

5. Verfahren nach Anspruch 4, wobei die Ansichtsdefinition eine Funktion aufweist, die ein Element in den Daten auf einen Datentyp in dem Typsystem für den Zieldatenspeicher abbildet, und wobei Identifizieren der Inkompatibilität zwischen dem Schema für die Daten, das in der Ansichtsdefinition angegeben ist, und dem Typsystem für den Zieldatenspeicher Empfangen einer fehlenden Datentypantwort für die in der Ansichtsdefinition angegebene Funktion umfasst, die das Element auf den Datentyp im Typsystem für den Zieldatenspeicher abbildet, wenn ein Ausführungsplan für die Ansicht durch das Ansichtsverwaltungssystem erzeugt wird.

6. Verfahren nach Anspruch 4 oder 5, wobei die Ansichtsdefinition eine Abbildungsansichtsdefinition ist, wobei die Abbildungsansichtsdefinition ein Schema für die Ansicht identifiziert, das in einer anderen Ansichtsdefinition spezifiziert ist, die einen anderen Zieldatenspeicher zum Speichern der Ansicht identifiziert.

7. Verfahren nach einem der Ansprüche 4-6, wobei die Ansichtsdefinition gemäß einer Abfragesprache spezifiziert ist.

8. Verfahren nach einem der Ansprüche 4-7, wobei der eine oder die mehreren Datenspeicher Daten gemäß einem ersten Datenmodell speichern, wobei der Zieldatenspeicher Daten gemäß einem zweiten Datenmodell speichert, wobei das Ansichtsverwaltungssystem ein Hub-Datenmodell implementiert und wobei das erste Datenmodell und das zweite Datenmodell jeweilige Erweiterungen des Hub-Datenmodells sind.

9. Verfahren nach Anspruch 8, wobei die Ansichtsdefinition ferner einen anderen Quelldatenspeicher zusätzlich zu dem einen oder den mehreren Quelldatenspeichern spezifiziert, um weitere Daten von dem anderen Quelldatenspeicher zu erhalten, die in dem Zieldatenspeicher als Teil der Ansicht zu speichern sind, wobei die weiteren Daten, die in dem anderen Quelldatenspeicher gespeichert sind, gemäß einem dritten Datenmodell gespeichert werden, das sich von dem ersten Datenmodell unterscheidet.

10. Verfahren nach einem der Ansprüche 4-9, wobei das Ansichtsverwaltungssystem ein materialisierter Ansichtsverwaltungsdienst ist, der als Teil eines Anbieternetzwerks angeboten wird, das mehrere verschiedene Datenspeicherungsdienste anbietet, wobei der Zieldatenspeicher als Teil eines der mehreren Datenspeicherungsdienste implementiert ist, der sich von dem einen oder den mehreren Quelldatenspeichern unterscheidet.

11. Nichtflüchtiges, computerlesbares Speichermedium, das Programmanweisungen speichert, die, wenn sie auf oder über einer oder mehreren Rechenvorrichtungen ausgeführt werden, die eine oder mehreren Rechenvorrichtungen veranlassen, Folgendes zu implementieren:
Empfangen, durch eine Schnittstelle eines Ansichtsverwaltungssystems, einer Ansichtsdefinition für eine Ansicht, wobei die Ansichtsdefinition Daten spezifiziert, die von einem oder mehreren Quelldatenspeichern zu erhalten sind, die die Daten für die Ansicht speichern, und einen Zieldatenspeicher zum Speichern der Daten für die Ansicht identifiziert (810);
Identifizieren, durch das Ansichtsverwaltungssystem, einer Inkompatibilität zwischen einem Schema für die Daten, das in der Ansichtsdefinition spezifiziert ist, und einem Typsystem für den Zieldatenspeicher (820);
Bestimmen einer oder mehrerer vorgeschlagener Modifikationen an der Ansichtsdefinition, um die Inkompatibilität aufzulösen; und
Bereitstellen, über die Schnittstelle des Ansichtsverwaltungssystems, einer Angabe der Inkompatibilität des Schemas, das in der Ansichtsdefinition spezifiziert ist, mit dem Typsystem für den Zieldatenspeicher; wobei die eine oder die mehreren vorgeschlagenen Modifikationen mit der Angabe der Inkompatibilität versehen werden (830).

12. Ein oder mehrere nichtflüchtige, computerlesbare Speicherungsmedien nach Anspruch 11, wobei die Ansichtsdefinition eine Funktion aufweist, die ein Element in den Daten auf einen Datentyp in dem Typsystem für den Zieldatenspeicher abbildet, und wobei beim Identifizieren der Inkompatibilität zwischen dem Schema für die Daten, das in der Ansichtsdefinition spezifiziert ist, und dem Typsystem für den Zieldatenspeicher die Programmanweisungen die eine oder die mehreren Rechenvorrichtungen veranlassen, das Empfangen einer fehlenden Datentypantwort für die in der Ansichtsdefinition spezifizierte Funktion zu implementieren, die das Element auf den Datentyp in dem Typsystem für den Zieldatenspeicher abbildet, wenn ein Ausführungsplan für die Ansicht durch das Ansichtsverwaltungssystem erzeugt wird.

## Revendications

1. Système, comprenant :
au moins un processeur ; et
une mémoire, stockant des instructions de programme qui, lorsqu'elles sont exécutées par l'au moins un processeur, amènent l'au moins un processeur à mettre en œuvre un service de gestion de vue matérialisée, le service de gestion de vue matérialisée étant configuré pour :
recevoir, par l'intermédiaire d'une interface, une définition de vue pour une vue matérialisée, la définition de vue spécifiant des données à obtenir en provenance d'une pluralité de magasins de données sources qui stockent les données de la vue matérialisée et identifiant un magasin de données cible pour stocker les données de la vue matérialisée (810) ;
détecter une incompatibilité entre un schéma pour les données spécifiées dans la définition de vue avec un système de type pour le magasin de données cible (820) ;
déterminer une ou plusieurs modifications suggérées pour la définition de vue pour résoudre l'incompatibilité ;
fournir, par l'intermédiaire de l'interface, une indication de l'incompatibilité du schéma spécifié dans la définition de vue avec le système de type pour le magasin de données cible ; dans lequel l'une ou les plusieurs modifications suggérées sont fournies avec l'indication de l'incompatibilité du type de données (830).

2. Système de la revendication 1, dans lequel la définition de vue inclut une fonction mappant un élément dans les données sur un type de données dans le système de type pour le magasin de données cible, et dans lequel, pour détecter l'incompatibilité entre le schéma pour les données, spécifiées dans la définition de vue, avec le système de type pour le magasin de données cible, le service de gestion de vue matérialisée est configuré pour détecter un type de données manquant lors de l'évaluation de la fonction spécifiée dans la définition de vue mappant l'élément sur le type de données dans le système de type pour le magasin de données cible.

3. Système de la revendication 1 ou 2, dans lequel la définition de vue est une définition de vue de mappage, dans lequel la définition de vue de mappage identifie un schéma pour la vue spécifiée dans une définition de vue différente qui identifie un magasin de données cible différent pour stocker la vue.

4. Procédé, comprenant :
la réception, par une interface d'un système de gestion de vue, d'une définition de vue pour une vue, la définition de vue spécifiant des données à obtenir en provenance d'un ou de plusieurs magasins de données sources qui stockent les données pour la vue et identifiant un magasin de données cible pour stocker les données pour la vue (810) ;
l'identification, par le système de gestion de vue, d'une incompatibilité entre un schéma pour les données, spécifiées dans la définition de vue, avec un système de type pour le magasin de données cible (820) ;
la détermination d'une ou de plusieurs modifications suggérées pour la définition de vue pour résoudre l'incompatibilité ; et
la fourniture, par l'intermédiaire de l'interface du système de gestion de vue, d'une indication de l'incompatibilité du schéma, spécifié dans la définition de vue, avec le système de type pour le magasin de données cible ; dans lequel l'une ou les plusieurs modifications suggérées sont fournies avec l'indication de l'incompatibilité (830).

5. Procédé de la revendication 4, dans lequel la définition de vue inclut une fonction mappant un élément dans les données sur un type de données dans le système de type pour le magasin de données cible et dans lequel l'identification de l'incompatibilité entre le schéma pour les données, spécifiées dans la définition de vue, avec le système de type pour le magasin de données cible comprend la réception d'une réponse de type de données manquant pour la fonction spécifiée dans la définition de vue mappant l'élément sur le type de données dans le système de type pour le magasin de données cible lors de la génération d'un plan d'exécution pour la vue par le système de gestion de vue.

6. Procédé de la revendication 4 ou 5, dans lequel la définition de vue est une définition de vue de mappage, dans lequel la définition de vue de mappage identifie un schéma pour la vue spécifiée dans une définition de vue différente qui identifie un magasin de données cible différent pour stocker la vue.

7. Procédé de de quelconques des revendications 4 à 6, dans lequel la définition de vue est spécifiée selon un langage d'interrogation.

8. Procédé de de quelconques des revendications 4 à 7, dans lequel l'un ou les plusieurs magasins de données stockent des données selon un premier modèle de données, dans lequel le magasin de données cible stocke des données selon un deuxième modèle de données, dans lequel le système de gestion de vue met en œuvre un modèle de données central, et dans lequel le premier modèle de données et le deuxième modèle de données sont des extensions respectives du modèle de données central.

9. Procédé de la revendication 8, dans lequel la définition de vue spécifie en outre un magasin de données source différent en plus de l'un ou des plusieurs magasins de données sources pour obtenir des données supplémentaires en provenance du magasin de données source différent à stocker dans le magasin de données cible en tant que partie de la vue, dans lequel les données supplémentaires stockées dans le magasin de données source différent sont stockées selon un troisième modèle de données différent du premier modèle de données.

10. Procédé de de quelconques des revendications 4 à 9, dans lequel le système de gestion de vue est un service de gestion de vue matérialisée offert en tant que partie d'un réseau fournisseur qui offre une pluralité de différents services de stockage de données, dans lequel le magasin de données cible est mis en œuvre en tant que partie d'un de la pluralité de services de stockage de données différent de l'un ou des plusieurs magasins de données sources.

11. Support non transitoire lisible par ordinateur, stockant des instructions de programme qui lorsqu'elles sont exécutées sur un ou plusieurs dispositifs informatiques ou sur la totalité d'un ou de plusieurs dispositifs informatiques, amènent l'un ou les plusieurs dispositifs informatiques à mettre en œuvre
la réception, par une interface d'un système de gestion de vue, d'une définition de vue pour une vue, la définition de vue spécifiant des données à obtenir en provenance d'un ou de plusieurs magasins de données sources qui stockent les données pour la vue et identifiant un magasin de données cible pour stocker les données pour la vue (810) ;
l'identification, par le système de gestion de vue, d'une incompatibilité entre un schéma pour les données, spécifiées dans la définition de vue, avec un système de type pour le magasin de données cible (820) ;
la détermination d'une ou de plusieurs modifications suggérées pour la définition de vue pour résoudre l'incompatibilité ; et
la fourniture, par l'intermédiaire de l'interface du système de gestion de vue, d'une indication de l'incompatibilité du schéma, spécifié dans la définition de vue, avec le système de type pour le magasin de données cible ; dans lequel l'une ou les plusieurs modifications suggérées sont fournies avec l'indication de l'incompatibilité (830).

12. Support ou supports non transitoire(s) lisible(s) par ordinateur de la revendication 11, dans le(s)quel(s) la définition de vue inclut une fonction mappant un élément dans les données sur un type de données dans le système de type pour le magasin de données cible, et dans lequel, dans l'identification de l'incompatibilité entre le schéma pour les données, spécifiées dans la définition de vue, avec le système de type pour le magasin de données cible, les instructions de programme amènent l'un ou les plusieurs dispositifs informatiques à mettre en œuvre la réception d'une réponse de type de données manquant pour la fonction spécifiée dans la définition de vue mappant l'élément sur le type de données dans le système de type pour le magasin de données cible lors de la génération d'un plan d'exécution pour la vue par le système de gestion de vue.
